(19)

Europäisches
Patentamt
European
Patent Office
Office européen
des brevets

(11) **EP 2 413 244 A1**

(12) **EUROPEAN PATENT APPLICATION**

(43) Date of publication:
**01.02.2012 Bulletin 2012/05**

(51) Int Cl.:
***G06F 12/12*** (2006.01)

(21) Application number: **10290430.7**

(22) Date of filing: **30.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Alcatel Lucent
75007 Paris (FR)**

(72) Inventors:
• **Perino, Diego
92130 Issy-les-Moulineaux (FR)**

• **Carofiglio, Giovanna
92290 Chatenay Malabry (FR)**

(74) Representative: **Cockayne, Gillian et al
Alcatel-Lucent Telecom Limited
Unit 18, Core 3,
Workzone
Innova Business Park
Electric Avenue
Enfield
EN3 7XU (GB)**

(54) **Method and apparatus for allocating memory in a cache**

(57)     A method of allocating memory in a cache for a plurality different classes of content includes guaranteeing a respective minimum amount of memory for each class of content to store valid data, the guaranteed minimum amount for each class being proportional to a given weight for that class. In one method, when the guaranteed minimum amount for one class is not fully occupied by data in that class, spare memory capacity of the guaranteed minimum amount is temporarily re-allocated to one or more of the other classes. This re-allocation may be based on weightings associated with the classes.

*FIG. 1*

EP 2 413 244 A1

**Description**

FIELD OF THE INVENTION

The present invention relates to a method and apparatus for allocating memory in a cache, and more particularly for allocating memory for a plurality of different classes of content

BACKGROUND OF THE INVENTION

A network cache is a component that transparently stores data to serve future content requests. Data stored within the cache is a copy of an original element that is stored elsewhere. If a client or user generates a request for an element stored in the cache, that request is served by reading the cache without contacting the original data source. Thus caching may improve performance, for example, by enabling a faster response time, requiring less bandwidth and the like. If the requested data is not stored in the cache, the request is routed towards the original source or redirected to other caches.

Each cache has a limited storage capacity which is managed by a cache replacement strategy. The strategy is used to select which data should be removed from the cache when new data must be stored. Also, data stored in a cache is valid only for a limited period of time after which it becomes obsolete. For instance, a copy of given webpage is not valid once it has been updated at the original server. Such obsolete data is the first to be removed from a cache to make room for new elements. Cache coherence is concerned with ensuring that up to date copies of the original content are stored in the relevant cache or caches.

Several cache replacement and coherence mechanisms have been proposed to manage caches, for example, to manage web page content, by adding and removing an entire web object.

BRIEF SUMMARY

According to a first aspect of the invention, a method of allocating memory in a cache for a plurality different classes of content includes guaranteeing a respective minimum amount of memory for each class of content to store valid data, the guaranteed minimum amount for each class being proportional to a given weight for that class.

The invention may be applied to networks with caching capabilities such as Content Centric Networks, Redundancy Elimination services, and the like. Performance of applications that generate content may be strongly impacted by the amount of memory space devoted at every node to their classes.

In one embodiment, a diversity of web objects, for example, may be handled appropriately for each class. Web objects include, but are not limited to, web pages, multimedia streams and images, for example.

The method may be used to guarantee a minimum amount of memory to each class of content to store valid, that is, non-obsolete, data while providing a flexible and efficient use of the whole memory space. The method may be applied at object granularity and/or packet granularity levels.

In one embodiment, when the guaranteed minimum amount for one class is not fully occupied by data in that class, spare memory capacity of the guaranteed minimum amount is temporarily re-allocated to one or more of the other classes. Thus, if some classes do not completely exploit their devoted memory space because they do not have enough valid data, in this embodiment, other classes may temporarily use the spare capacity.

In one embodiment, spare memory capacity is allocated according to class weights. In another embodiment, spare capacity is uniformly allocated.

According to a second aspect of the invention, there is provided apparatus operative to implement a method in accordance with the first aspect.

According to a third aspect of the invention, there is provided a data storage medium storing a machine-executable program for performing a method in accordance with the first aspect.

BRIEF DESCRIPTION OF THE DRAWINGS

Some embodiments of the present invention will now be described by way of example only, and with reference to the accompanying drawings, in which:

Figure 1 is a schematic flowchart of a method in accordance with the invention;
Figure 2 schematically illustrates an apparatus in accordance with the invention.

DETAILED DESCRIPTION

In one embodiment of the invention, content to be stored in a cache may be denoted as being included in a particular class.

Consider a cache of size $C$ and a set of content classes $N$. A weight $w_i$ is associated with every class $i \in$ N. The minimum amount of memory guaranteed to a class $i$ is denoted as $c_i^*$ and is given by:

$$c_i^* = \frac{w_i}{\sum_{n \in N} w_n} C \qquad \text{-- equation (1)}$$

The amount of memory used by class $i$ to store valid data is denoted as $u_i$, and $D$ is the set of classes for which $c_i^* - u_i > 0$. This set $D$ contains classes that do not have enough valid data to completely fill their guaranteed minimum amounts of memory, valid data being non-obsolete data. The total amount of guaranteed minimum memory space that is unused by these classes in set $D$ is denoted as $F$ and is given by:

$$F = \sum_{n \in D} c_n^* - u_n \qquad \text{-- equation (2)}$$

This additional memory space $F$ is thus available for use by classes $N\backslash D$ that are not included in set D.

Different strategies may be used for sharing the additional memory space $F$ among classes $N\backslash D$. In one mechanism, the additional memory space $F$ is uniformly distributed among demanding classes, that is, $f_i = \frac{F}{|N \backslash D|}$. In another mechanism, additional memory space $F$ is assigned according to priority criteria. In another mechanism, a FIFO (first in, first out) approach is used.

In one strategy, the additional space $F$ is shared according to class weights. By sharing according to class weightings, proportional memory assignment among classes may be maintained. Using a weighting approach, a class $i \in N\backslash D$ receives a minimum amount of additional space as given by the following expression:

$$f_i = \frac{w_i}{\sum_{n \in N \backslash D} w_n} F \qquad \text{-- equation (3)}$$

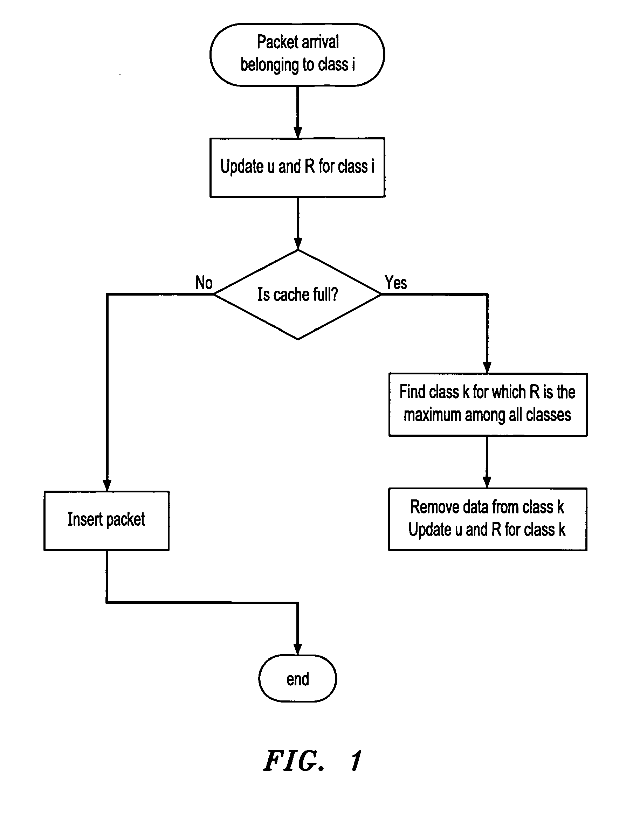

$R(u_i)$ is a function which is used to quantify the excess of each class $i$. Data is removed from memory allocated to a class k for which $R_k$ is greatest compared to that for other classes. The flowchart of Figure 1 illustrates the mechanism applied when new content is received. If more than one class has the same maximum value for R, a choice is made at random as to which of these classes to select for data removal. Data is removed only from those classes that have exceeded their capacity c*. For function R, $R(u_i) < R(u_j) \forall i \in D \forall j N \backslash D$.

The strategy used to share the additional memory space among classes is related to the particular mechanism used to remove data from the cache. For example, where there is a strategy of uniform allocation of additional memory space,

$$F \begin{cases} R(u_i) = 0 \text{ if } u_i \leq c_i^* \\ R(u_i) = u_i \text{ otherwise} \end{cases} \text{ for all classes}$$

In contrast, and as now described in more detail, where the strategy is such that the additional space $F$ is shared according to class weights and there is proportional allocation of additional memory space F,

$$R_k(u_k) = \frac{u_k}{w_k}$$

For this strategy, consider a cache storing three classes of content, N={Class 1, Class 2, Class 3}, with weights $W_1=2$ $W_2=1$ $W_3=2$. It is further assumed that the cache size is equal to C= 10 units and that there is proportional allocation of additional memory F.

According to equation (1): $c_1$*=4 units, $c_2$*=2 units, $c_3$*=4 units.

Consider the following cache initial condition:

| Class | # of unit |
|-------|-----------|
| 1 | 4 |
| 2 | 2 |
| 3 | 4 |

In such scenario $u_1=4$, $u_2=2$, $u_3=4$, $R_1=2$, $R_2=2$, $R_3=2$.

The following sets out an illustrative exemplary sequence of events following the starting conditions shown in the table above.

**a) Arrival of one unit of Class 1.**

1. $u_1=5$, $u_2=2$, $u_3=4$, $R_1=2.5$, $R_2=2$, $R_3=2$.

2. A unit of class 1 is removed according to Class 1 replacement policy.

3. $u_1=4$, $u_2=2$, $u_3=4$, $R_1=2$, $R_2=2$, $R_3=2$.

| Class | # of unit |
|-------|-----------|
| 1 | 4 |
| 2 | 2 |
| 3 | 4 |

**b) Class 3 coherence mechanism declares 3 units of Class 3 data as obsolete.**

1. Obsolete units of Class 3 are removed from the cache.

2. $u_1=4$, $u_2=2$, $u_3=1$, $R_1=2$, $R_2=2$, $R_3=0.5$.

| Class | # of unit |
|-------|-----------|
| 1 | 4 |
| 2 | 2 |
| 3 | 1 |

**c) Arrival of one unit of Class 2.**

1. $u_1=4$, $u_2=3$, $u_3=1$, $R_1=2$, $R_2=3$, $R_3=0.5$.

| Class | # of unit |
|-------|-----------|
| 1 | 4 |
| 2 | 3 |
| 3 | 1 |

**d) Arrival of one unit of Class 2.**

1. $u_1$=4, $u_2$=4, $u_3$=1, $R_1$=2, $R_2$=4, $R_3$=0-5.

| Class | # of unit |
|-------|-----------|
| 1 | 4 |
| 2 | 4 |
| 3 | 1 |

**e) Arrival of one unit of Class 2.**
1. $u_1$=4, $u_2$=5, $u_3$=1, $R_1$=2, $R_2$=5, $R_3$=0.5.

| Class | # of unit |
|-------|-----------|
| 1 | 4 |
| 2 | 5 |
| 3 | 1 |

**f) Arrival of one unit of Class 1.**
1. $u_1$=5, $u_2$=5, $u_3$=1, $R_1$=2.5, $R_2$=5, $R_3$=0.5.
2. A unit of Class 2 is removed according to Class 2 replacement policy.
3. $u_1$=5, $u_2$=4, $u_3$=1, $R_1$=2.5, $R_2$=4, $R_3$=0.5.

| Class | # of unit |
|-------|-----------|
| 1 | 5 |
| 2 | 4 |
| 3 | 1 |

**g) Arrival of one unit of Class 1.**

1. $u_1$=6, $u_2$=4, $u_3$=1, $R_1$=3, $R_2$=4, $R_3$=0.5.
2. A unit of Class 2 is removed according to Class 2 replacement policy.
3. $u_1$=6, $u_2$=3, $u_3$=1, $R_1$=3, $R_2$=3, $R_3$=0.5.

| Class | # of unit |
|-------|-----------|
| 1 | 6 |
| 2 | 3 |
| 3 | 1 |

**h) Arrival of one unit of Class 1.**
1. $u_1$=7, $u_2$=3, $u_3$=1, $R_1$=3.5, $R_2$=3, $R_3$=0.5.
2. A unit of Class 1 is removed according to Class 1 replacement policy.
3. $u_1$=6, $u_2$=3, $u_3$=1, $R_1$=3, $R_2$=3, $R_3$=0.5.

| Class | # of unit |
|-------|-----------|
| 1 | 6 |
| 2 | 3 |
| 3 | 1 |

**i) Arrival of one unit of Class 3.**

1. $u_1$=6, $u_2$=3, $u_3$=2, $R_1$=3, $R_2$=3, $R_3$=1.

2. A unit of Class 1 is removed according to Class 1 replacement policy (ties are broken at random).

3. $u_1$=5, $u_2$=3, $u_3$=2, $R_1$=2.5, $R_2$=3, $R_3$=1.

| Class | # of unit |
|-------|-----------|
| 1 | 5 |
| 2 | 3 |
| 3 | 2 |

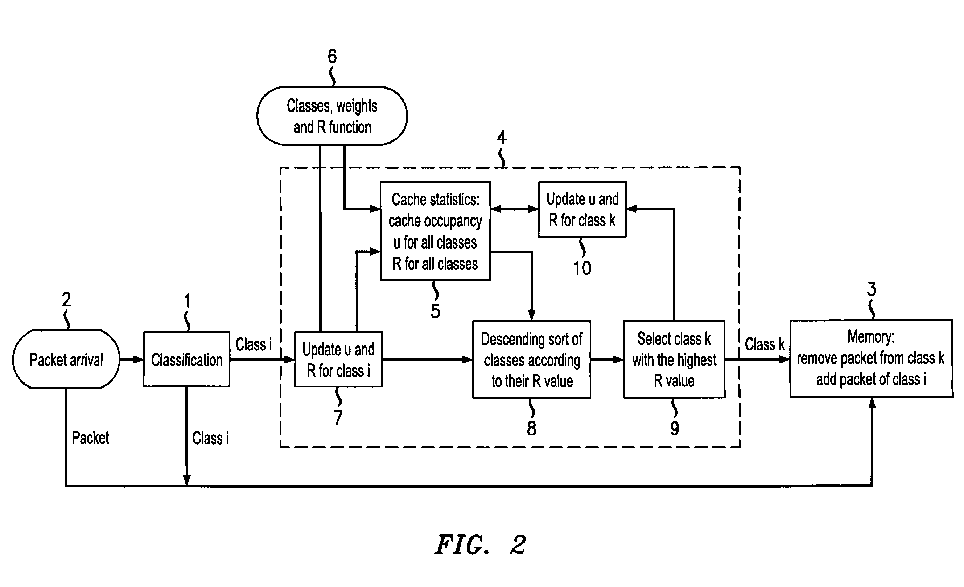

A replacement and coherence mechanism may also be applied per every class. With reference to Figure 2, an apparatus for allocating memory in a cache includes a classifier 1 which receives a packet from 2 and assigns a class $i$ depending on the characteristics of the received packet. The packet is sent to the cache memory 3 to be stored. If there is insufficient memory for the new packet, a packet from class $k$ is removed.

The processor 4, indicated by the broken line, has a cache statistics store 5 which holds information including the cache occupancy, $u$ for all classes and $R$ for all classes. The classes, weights and R function to be applied by the processor 4 are obtained from controller 6 and used at 7 in conjunction with information from classifier 1 to update $u$ and $R$ for class $i$. The updated values are held in store 5 and also applied to a sorter 8 to enable the classes to be sorted according to their R values. This sort information is then used by selector 9 to select the class k with the highest R value and the result sent to the cache memory 3. Values of u and R for class k are updated at 10.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

**Claims**

1. A method of allocating memory in a cache for a plurality different classes of content including:

    guaranteeing a respective minimum amount of memory for each class of content to store valid data, the guaranteed minimum amount for each class being proportional to a given weight for that class.

2. The method as claimed in claim 1 and including, when the guaranteed minimum amount for one class is not fully occupied by data in that class, temporarily re-allocating spare memory capacity of the guaranteed minimum amount to one or more of the other classes.

3. The method as claimed in claim 2 and including allocating spare memory capacity according to class weights.

4. The method as claimed in claim 3 and including allocating memory $f_i$ to a class $i \in N\backslash D$ from spare memory capacity $F$ according to the relation

$$f_i = \frac{w_i}{\sum_{n\in N\backslash D} w_n} F \ .$$

5. The method as claimed in claim 3 or 4 and including removing content for classes that have exceeded their capacity using class weights to determine the class of content to be removed.

6. The method as claimed in claim 5 wherein the content to be removed is determined using the relation $R_k(u_k) = \dfrac{u_k}{w_k}$ and selecting content to be removed from a class having a maximum value of R.

7. The method as claimed in claim 2 and wherein the spare memory capacity is uniformly distributed across classes requiring additional capacity.

8. The method as claimed in claim 7 and including removing content for classes that have exceeded their capacity using the relation

$$F\begin{cases} R(u_i) = 0 \text{ if } u_i \leq c_i^\bullet \\ R(u_i) = u_i \text{ otherwise} \end{cases} \text{ for all classes}$$

and selecting content to be removed from a class having a maximum value of R.

9. The method as claimed in claim 2 and wherein the spare memory capacity distributed across classes requiring additional capacity according to priority criteria.

10. The method as claimed in claim 2 and the spare memory capacity distributed across classes requiring additional capacity on a first in, first out basis.

11. Apparatus operative to carry out the method as claimed in any preceding claim.

12. A data storage medium storing a machine-executable program for performing a method for allocating memory in a cache for a plurality different classes of content including: guaranteeing a respective minimum amount of memory for each class of content to store valid data, the guaranteed minimum amount for each class being proportional to a given weight for that class.

FIG. 1

*FIG. 2*

Europäisches
Patentamt

European
Patent Office

Office européen
des brevets

# EUROPEAN SEARCH REPORT

**Application Number**

EP 10 29 0430

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/235457 A1 (HASENPLAUGH WILLIAM C [US] ET AL HASENPLAUGH WILLIAM C [US] ET AL) 25 September 2008 (2008-09-25) * paragraph [0006] - paragraph [0011] * ----- | 1-12 | INV. G06F12/12 |
| X | US 5 394 531 A (SMITH KEVIN F [US]) 28 February 1995 (1995-02-28) * column 3, line 37 - line 53 * * column 8, line 3 - line 26 * * column 10, line 23 - column 14, line 34 * ----- | 1-12 | |
| A | US 5 537 635 A (DOUGLAS DANIEL G [US]) 16 July 1996 (1996-07-16) * column 3, line 2 - line 18 * * column 3, line 61 - column 4, line 1 * * column 4, line 61 - column 5, line 48 * ----- | 1-12 | |

| | |
|---|---|
| | TECHNICAL FIELDS SEARCHED (IPC) |
| | G06F |

The present search report has been drawn up for all claims

| Place of search | Date of completion of the search | Examiner |
|---|---|---|
| The Hague | 23 February 2011 | Toader, Elena Lidia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 29 0430

This annex lists the patent family members relating to the patent documents cited in the above-mentioned European search report.
The members are as contained in the European Patent Office EDP file on
The European Patent Office is in no way liable for these particulars which are merely given for the purpose of information.

23-02-2011

| Patent document cited in search report | | Publication date | Patent family member(s) | | Publication date |
|---|---|---|---|---|---|
| US 2008235457 | A1 | 25-09-2008 | NONE | | |
| US 5394531 | A | 28-02-1995 | EP | 0391871 A2 | 10-10-1990 |
| | | | JP | 2287648 A | 27-11-1990 |
| US 5537635 | A | 16-07-1996 | NONE | | |

EPO FORM P0459

For more details about this annex : see Official Journal of the European Patent Office, No. 12/82